# EUROPEAN PATENT APPLICATION

(11) **EP 1 054 331 A2**
(43) Date of publication of application: **22.11.2000**
(21) Application number: 00304187.8
(22) Date of filing: 18.05.2000
(51) Int. Cl.: G06F 17/30

(54) **System and method for storing and retrieving document data**

(30) Priority: 21.05.1999 US 316174
(71) Applicant: Hewlett-Packard Company, Palo Alto, California 94304-1112 (US)
(72) Inventor: Zimmerale, Daniel, Fort Collins, CO 80525 (US)
(74) Representative: Jackson, Richard Eric

(57) **Abstract**

Schedule data (23) associated with a plurality of events is stored in memory (25). A scanning mechanism (52) scans the surface of a document and produces document data (58) based on an image of the document. A schedule manager (30) stores the document data (58) into memory. The schedule manager (30) also determines a correspondence between the document data (58) and one of the events and correlates the document data (58) wit the schedule data (23) based on the correspondence. The schedule manager (30) utilizes the correlation between the document data (58) and the schedule data (23) to retrieve the document data (58) when a request from the input device (35) is received that identifies the one event.

## Description

### BACKGROUND OF THE INVENTION

### FIELD OF THE INVENTION

The present invention generally relates to data processing techniques and, in particular, to a system and method for retrieving document data based on correlations between the document data and schedule data.

### RELATED ART

Many computer systems employ a scheduling program to assist users in keeping track of meetings, deadlines, social engagements, and other types of events. Each scheduling program usually includes schedule data defining a user's schedule and a schedule manager to control the processing of the schedule data. The schedule data typically defines different time periods (such as hours within a day, for example) and indicates when an event is scheduled to occur during one of the time periods.

For example, a user may provide inputs to indicate that a meeting has been scheduled at a particular time (*e.g.*, at a particular hour and day). The schedule manager is designed to define schedule data indicating that the meeting has been scheduled. The data may include, among other information, the exact time of the meeting, the nature of the meeting, the location of the meeting, the person(s) expected to attend the meeting, *etc*.

At any time, the schedule data may be rendered. For example, a graphical schedule showing each hour of a selected day or week may be presented to the user. The schedule data is used to indicate which hours are associated with events and to indicate the details of the events. By viewing the schedule, the user is able to determine when certain events are scheduled to occur.

It should be noted that scheduling programs are generally well known in the art. U.S. Patent No. 4,780,839, entitled "Electronic Schedule Display Apparatus," and U.S. Patent No. 4,896,306, entitled "Electronic Scheduler Capable of Searching Schedule Data Based on Time," which are both incorporated herein by reference, show examples of conventional scheduling devices that may be used to track scheduled events.

When the user of a scheduling program attends a scheduled event, it is often desirable for the user to obtain a software copy of selected documents introduced or discussed at the event. Therefore, scanning devices have been developed that allow a user to scan the image of a document into memory. Essentially, a scanning device captures an image of a selected document and produces a data file that defines the image in data. To increase the user's flexibility, some scanning devices have been designed as portable, stand-alone units.

Most computer systems associate a particular name with each data file stored in memory to identify the data file. Therefore, to retrieve a data file, a user usually supplies the computer system with the name of the data file, and the computer system locates and retrieves the requested data based on the filename provided by the user.

However, as the number of data files stored in the system increases, it becomes more and more difficult to remember the different filenames and to remember or identify which information is stored in each data file. Therefore, it becomes difficult to identify which data file includes data that defines the image of a desired document. Thus, a heretofore unaddressed need exists in the industry for a system and method for easily locating and retrieving document data that has been stored or received while the user was attending a scheduled event.

### SUMMARY OF THE INVENTION

The present invention overcomes the inadequacies and deficiencies of the prior art as discussed hereinbefore. Generally, the present invention provides a system and method for easily identifying and retrieving document data that is associated with an event.

The present invention utilizes a data storage device, an input device, a scanning device, and a schedule manager. Schedule data associated with a plurality of events is stored in the data storage device. The scanning mechanism scans the surface of a document and produces document data based on an image of the document, and the schedule manager stores the document data into memory. The schedule manager also determines a correspondence between the document data and one of the events and correlates the document data with the schedule data based on the correspondence. The schedule manager utilizes the correlation between the document data and the schedule data to retrieve the document data when a request from the input device is received that identifies the one event.

In accordance with another feature of the present invention, the correspondence is based on a determination that the document data is scanned by the scanning device during or at the one event.

The present invention can also be viewed as providing a method for storing and retrieving document data. In this regard, the method can be broadly conceptualized by the following steps: defining schedule data based on a plurality of events; scanning a document; producing document data based on the scanning step; storing the document data; correlating the document data with one of the events; receiving inputs from a user; identifying the one event based on the inputs; determining whether the document data is correlated with the one event in response to the identifying step; and retrieving the document data in response to a determination in the determining step that the document data is correlated with the one event.

Other features and advantages of the present invention will become apparent to one skilled in the art upon examination of the following detailed description, when read in conjunction with the accompanying drawings. It is intended that all such features and advantages be included herein within the scope of the present invention and protected by the claims.

### BRIEF DESCRIPTION OF THE DRAWINGS

The invention can be better understood with reference to the following drawings. The elements of the drawings are not necessarily to scale relative to each other, emphasis instead being placed upon clearly illustrating the principles of the invention. Furthermore, like reference numerals designate corresponding parts throughout the several views.
FIG. 1 is a block diagram illustrating a computer system in accordance with the present invention.
FIG. 2 is a block diagram illustrating the scanning device of FIG. 1 in accordance with the preferred embodiment of the present invention.
FIG. 3 is a block diagram illustrating the scanning device of FIG. 1 in accordance with another embodiment of the present invention.
FIG. 4 is a flow chart illustrating the architecture, functionality, and operation of the schedule manager of FIG. 1.
FIG. 5 is an illustration of a schedule rendered from the schedule data depicted in FIG. 1.
FIG. 6 is a flow chart illustrating the architecture and functionality of the data manager of FIG. 2.

### DETAILED DESCRIPTION OF THE PREFERRED EMBODIMENT

In general, the present invention relates to a system and method for storing and retrieving document data to/from memory. Each set of document data stored in memory is correlated with an event. Therefore, a particular set of document data can be easily located by searching for and locating the correlated event.

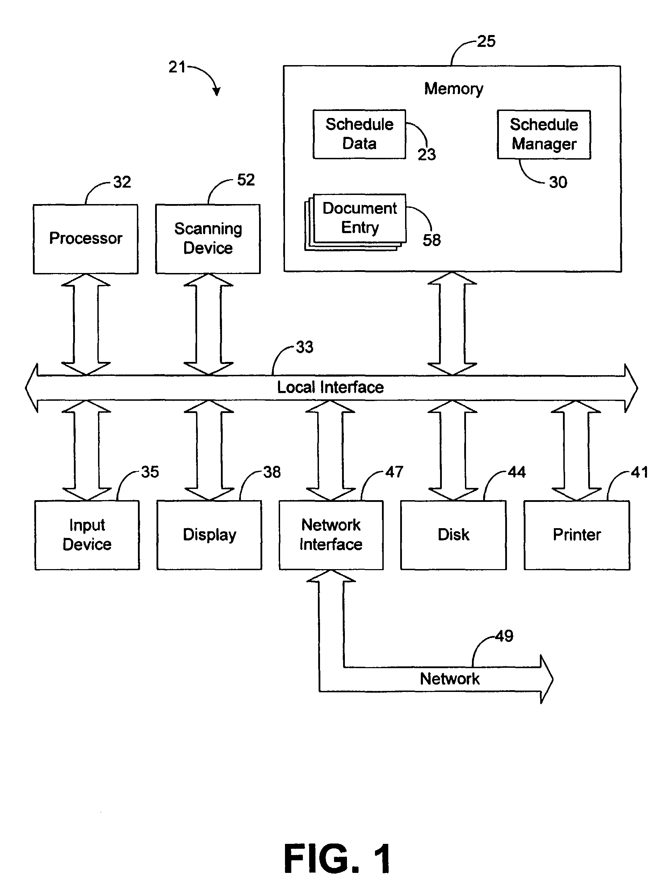

FIG. 1 depicts a computer system 21 implementing the principles of the present invention. The system 21 includes schedule data 23 stored in memory 25. The schedule data 23 defines a user's schedule and includes information relating to events, such as meetings, deadlines, social engagements *etc*.

A schedule manager 30 is configured to control the processing of the schedule data 23. The schedule manager 30 can be implemented in software, hardware, or a combination thereof. In the preferred embodiment, as illustrated by way of example in FIG. 1, the schedule manager 30 of the present invention along with its associated methodology is implemented in software, is stored in memory 25 of computer system 21, and is executed by processor(s) 32 of the computer system 21.

Note that the schedule manager 30, when implemented in software, can be stored and transported on any computer-readable medium for use by or in connection with an instruction execution system, apparatus, or device, such as a computer-based system, processor-containing system, or other system that can fetch the instructions from the instruction execution system, apparatus, or device and execute the instructions. In the context of this document, a "computer-readable medium" can be any means that can contain, store, communicate, propagate, or transport the program for use by or in connection with the instruction execution system, apparatus, or device. The computer readable medium can be, for example but not limited to, an electronic, magnetic, optical, electromagnetic, infrared, or semiconductor system, apparatus, device, or propagation medium. More specific examples (a nonexhaustive list) of the computer-readable medium would include the following: an electrical connection having one or more wires, a portable computer diskette, a random access memory (RAM), a read-only memory (ROM), an erasable programmable read-only memory (EPROM or Flash memory), an optical fiber, and a portable compact disc read-only memory (CDROM). Note that the computer-readable medium could even be paper or another suitable medium upon which the program is printed, as the program can be electronically captured, via for instance optical scanning of the paper or other medium, then compiled, interpreted or otherwise processed in a suitable manner if necessary, and then stored in a computer memory. As an example, the schedule manager 30 may be magnetically stored and transported on a conventional portable computer diskette.

The preferred embodiment of the computer system 21 of FIG. 1 comprises one or more conventional processing elements 32, such as a digital signal processor (DSP), that communicate to and drive the other elements within the system 21 via a local interface 33, which can include one or more buses. Furthermore, an input device 35, for example, a keyboard or a mouse, can be used to input data from a user of the system 21, and a screen display 38 or a printer 41 can be used to output data to the user. A disk storage mechanism 44 can be connected to the local interface 33 to transfer data to and from a nonvolatile disk (*e.g.*, magnetic, optical, *etc.*). The system 21 can be connected to a network interface 47 that allows the system 23 to exchange data with a network 49.

The preferred embodiment of the system 21 also includes a scanning device 52 configured to capture an image of a document. The captured image can be analyzed, via conventional techniques, to produce a document entry 58. A "document entry" is defined herein as data that defines at least a portion of a document. As shown by FIG. 1, the system 21 can include a plurality of document entries 58.

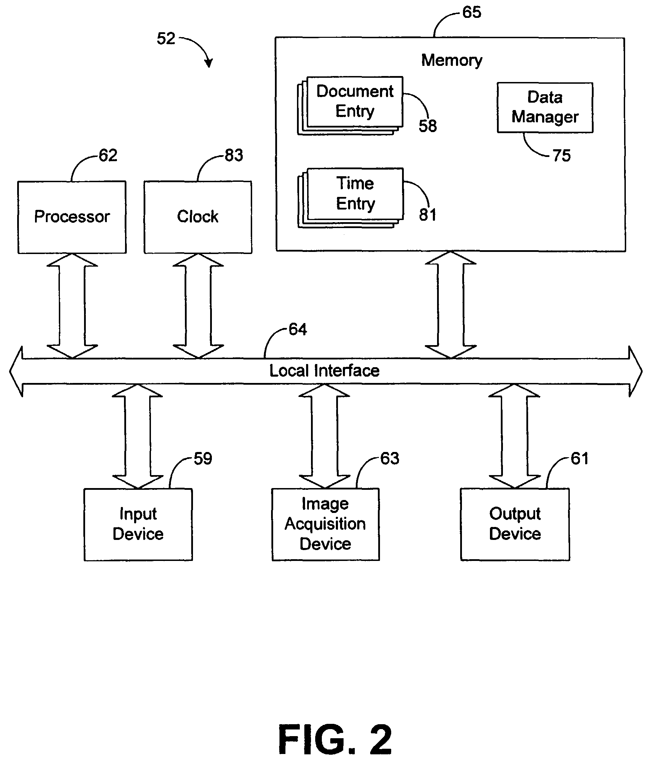

In the preferred embodiment, the scanning device 52 is detachable from computer system 21. FIG. 2 depicts a more detailed view of the scanning device 52. The scanning device 52 preferably includes an input device 59 and an output device 61 for communicating and interfacing with a user. The scanning device 52 also includes one or more processing elements 62, such as a DSP, that communicate to and drive the other elements within the scanning device 52 via a local interface 64. An image acquisition device 63 is used to capture an image of a document, and the data defining the image of the document captured by the image acquisition device 63 is preferably stored in memory 65 as a document entry 58.

The process of capturing an image of a document via image acquisition mechanism 63 and of producing data defining the captured image is fully described in U.S. Patent No. 5,825,044, entitled "Freehand Image Scanning Device which Compensates for Non-Linear Color Movement," U.S. Patent No. 5,686,720 entitled "Method and Device for Achieving High Contrast Surface Illumination," U.S. Patent No. 5,769,384, entitled "Low Differential Light Level Photoreceptors," and U.S. Patent No. 5,703,353, entitled "Offset Removal and Spatial Frequency Band Filtering Circuitry for Photoreceiver Signals," which are all incorporated herein by reference.

A data manager 75 is preferably configured to control the operation of the scanning device 52. The data manager 75 can be implemented in software, hardware, or a combination thereof. In the preferred embodiment, as illustrated by way of example in FIG. 2, the data manager 75 of the present invention along with its associated methodology is implemented in software and stored in memory 65.

The data manager 75 is designed to receive inputs from input device 59 indicating when a document is ready to be scanned. In response, the data manager 75 is configured to capture an image of the document via image acquisition device 63 and to store a document entry 58 defining the image of the document imaged by image acquisition device 63.

In response to the process of scanning the document into memory 65, the data manager 75 is designed to store a time entry 81 in memory 65 and to correlate the time entry 81 with the document entry 58. The time entry 81 includes data that indicates the approximate time that the data of the correlated document entry 58 was scanned by the scanning device 52.

As an example, the time entry 81 can include a time stamp produced by clock 83. A time stamp is data that indicates when the time stamp was generated by the clock 83. Therefore, the data manager 75 may retrieve a time stamp from clock 83 at the approximate time that the data defining a document entry 58 is scanned by the system 21. The data manager 75 may then store the retrieved time stamp in memory 65 as time entry 81 and correlate this time entry 81 with the foregoing document entry 58. As an example, the data manager 75 may define a pointer in the data of the document entry 58 that points to the time entry 81.

Therefore, each document entry 58 defining the image of a particular document scanned by the scanning device 52 is associated with a particular time entry 81 that indicates the approximate time at which the image of the document was scanned into memory 65. It should be noted tat the use of pointers is not necessary and that there are various other conventional techniques that may be employed to correlate the time entry 81 with the document entry 58.

When the scanning device 52 is attached to the system 21 as shown by FIG. 1, the data manager 75 is designed to transmit the document entry 58 and the time entry 81 correlated with the document entry 58. The schedule manager 30 is configured to receive the document entry 58 and the correlated time entry 81. The schedule manager 30 is then designed to search the schedule data 23 for an event corresponding with the received time entry 81. For example, assume that the document defined by the received document entry 58 was scanned into scanning device 52 during a meeting scheduled or defined by the schedule data 23. The schedule manager 30 determines that the received time entry 81 (*i.e.*, the time stamp correlated with the received document entry 58) corresponds with the meeting based on the scheduled time of the meeting (as defined by the schedule data 23) and the time indicated by the time entry 81. In this regard, the time indicated by the time stamp should be within or close to the scheduled time interval of the meeting.

When the schedule manager 30 determines that the time entry 81 corresponds with the meeting, the schedule manager 30 is designed to correlate the schedule data 23 defining the meeting with the received document entry 58 that is associated with the time entry 81. For example, the schedule manager 30 may define a pointer within the schedule data 23 that points to (*i.e.*, indicates the address of) the received document entry 58. As a result, each document entry 58 is correlated with one or more corresponding events defined in the schedule data 23.

The schedule manager 30 is further designed to retrieve a document entry 58 in response to a request from the user. In this regard, the user may request the retrieval and display of a document via input device 35. In the preferred embodiment, the request indicates an event defined within the schedule data 23. For example, the user may request to view a document scanned by scanning device 52 during a particular meeting or other event. The schedule manager 30 is configured to search the schedule data 23 via conventional techniques to locate the data within the schedule data 23 that defines the specified event (*i.e.*, the meeting in the foregoing example).

Then, the schedule manager 30 is designed to retrieve the document entry 58 correlated with the specified event. In the example described hereinabove where the schedule manager 30 defined a pointer to point to the document entry 58 corresponding with the event, the schedule manager 30 is designed to utilize the pointer to locate the correlated document entry 58. Once the correlated document entry 58 is located by the schedule manager 30, the schedule manager 30 is designed to retrieve the document entry 58 and to process the document entry 58 as requested by the user. For example, if the user requested to view the document entry 58, the schedule manager 30 is designed to transmit the document entry 58 to display 38 or printer 41, which displays the document entry 58 in graphical form to the user through conventional techniques.

As a result, the user is able to view an image of the document defined by the document entry 58 retrieved in response to the user's request. Consequently, the user does not need to remember or find the filename associated with the requested document entry 58. Instead, the system 21 automatically retrieves the requested document entry 58 based on the event information supplied by the user.

It should be noted that it is not necessary for the time entry 81 to precisely indicate when the correlated document entry 58 was scanned by the scanning device 52. In this regard, the correlated time entry 81 may be produced at any time during or close to the time period scheduled for the corresponding event, in the preferred embodiment. For example, if a document was scanned during an event scheduled between 1:00 and 2:00, ten it is sufficient in the preferred embodiment for the time entry 81 to be created at any time between approximately 1:00 and 2:00 on the day of the event. Furthermore, it is possible to design logic that determines which event should be correlated with which time entry 81 even when the time entry 81 is not created during or close to the scheduled time of the corresponding event.

In another embodiment of the present invention, the schedule manager 30 is designed to correlate an event defined in schedule data 23 with document entry 58 based on inputs from the user. In this regard, the user via input device 35 or 59 selects which event is to be correlated with a particular document entry 58. In response, the schedule manager 30 is designed to identify the selected event in schedule data 23 and to correlate the selected event with the document entry 58. Therefore, an event defined by the schedule data 23 can be correlated with the appropriate document entry 58 without the utilization of a time entry 81.

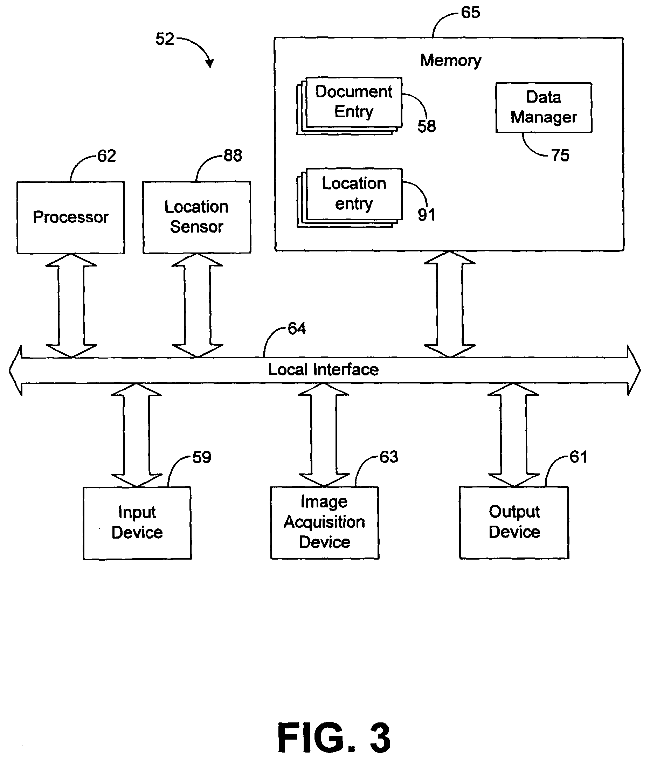

Another embodiment that can correlate an event with the appropriate document entry 58 without utilizing a time entry 81 is shown by FIG. 3. Referring to FIG. 3, the scanning device 52 includes a location sensor 88 that produces location data based on the location of the sensor 88. As an example, the location data can define the coordinates of the location of the sensor 88. Examples of the location sensor 88 are, but are not limited to, a GPS sensor, a LORAN sensor, or a TACAN sensor. Therefore, at the approximate time that data associated with a document entry 58 is scanned by the scanning device 52, the data manager 75 is designed to retrieve from sensor 88 data indicating the current location of the sensor 88. This retrieved data is then used to define a location entry 91, which is correlated with the document entry 58 and is stored in memory 65. Therefore, the location entry 91 indicates the location at which the data in the correlated document entry 58 was scanned by the scanning device 52. When desired, the document entry 58 and the correlated location entry 91 are transmitted to schedule manager 30 (FIG. 1), and the schedule manager 30 can utilize the information in the correlated location entry 88 to correlate the document entry 58 with one of the events scheduled in the schedule data 23, as further described hereinbelow.

In this embodiment, the schedule data 23 preferably includes location data associated with each event defined by the schedule data 23. The location data indicates the scheduled location for the associated event. For example, when entering an event into system 21, the user can specify the address or location of the event. If necessary, this address can be converted trough conventional techniques to the coordinates of the event so that the location data can be compared with the data defined by the location entries 91. In another example, the location of an event may be determined from a predefined look-up table. Various other techniques and configurations may be employed for defining the location data without departing from the principles of the present invention.

When the schedule manager 30 receives a document entry 58 and a correlated location entry 91, the schedule manager 30 compares the data in the location entry 91 with the location data in the schedule data 23. In this regard, the schedule manager 30 identifies the event that is scheduled to occur at or close to the location defined by the location entry 91. The schedule manager 30, then associates this event with the document entry 58 that is correlated with foregoing location entry 91. Therefore, the schedule manager 30 determines which document entries 58 are associated with documents that were scanned at an expected location of a particular event and correlates these entries 58 with this event.

As a result, the user later can access a document entry 58, as described hereinabove. In this regard, the user provides inputs to select a particular event. In response, the schedule manager 30 retrieves the document entry(ies) 58 correlated with the selected event and renders the data stored in the retrieved document entry(ies) 58 via display 38 and/or printer 41. Therefore, the aforementioned embodiment operates essentially the same as the preferred embodiment except that location data instead of time data is used to correlate the document entries 58 with the schedule data 23.

It should be noted that other types of data may be used to correlate the document entries 58 with the schedule data 23. Furthermore, although the scanning device 52 has been described hereinabove as a stand-alone unit, other embodiments for the scanning device 52 are possible. In this regard, the scanning device 52 may be configured to utilize processor 32, input device 35, display 38, and/or printer 41 of computer system 21 (FIG. 1) in lieu of processor 62, input device 59, and/or output device 61 (FIG. 2 and FIG. 3)

### OPERATION

The preferred use and operation of the system 21 and associated methodology are described hereafter.

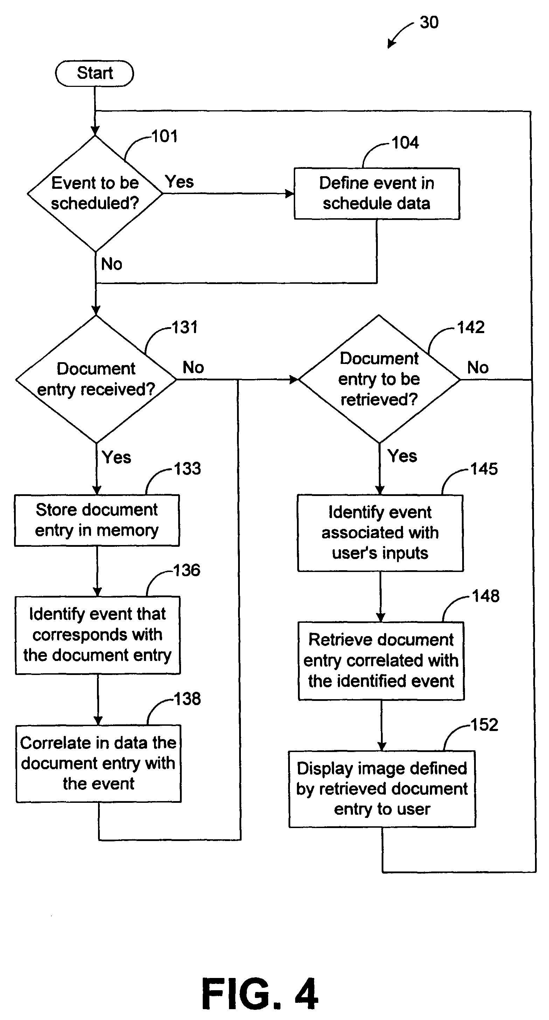

Assume that a user enters information via input device 35 of computer system 21 indicating that a meeting or other event has been scheduled for a particular time (*e.g.*, between a time range of a particular day of a particular year). As shown by blocks 101 and 104 of FIG. 4, the schedule manager 30 receives the information entered by the user and defines the event in schedule data 23 through techniques known in the art. The schedule manager 30 may define multiple events in the schedule data 23.

At any time, the user may submit a request via input device 35 to have the schedule data 23 or a portion of the schedule data 23 rendered via display 38 or printer 41. In response to the request, the schedule manager 30 retrieves the requested data from schedule data 23 and transmits the retrieved data to display 38 or printer 41. Through techniques known in the art, the display 38 or printer 41 interfaces the data with the user. Therefore, the user may view the schedule defined by the schedule data 23.

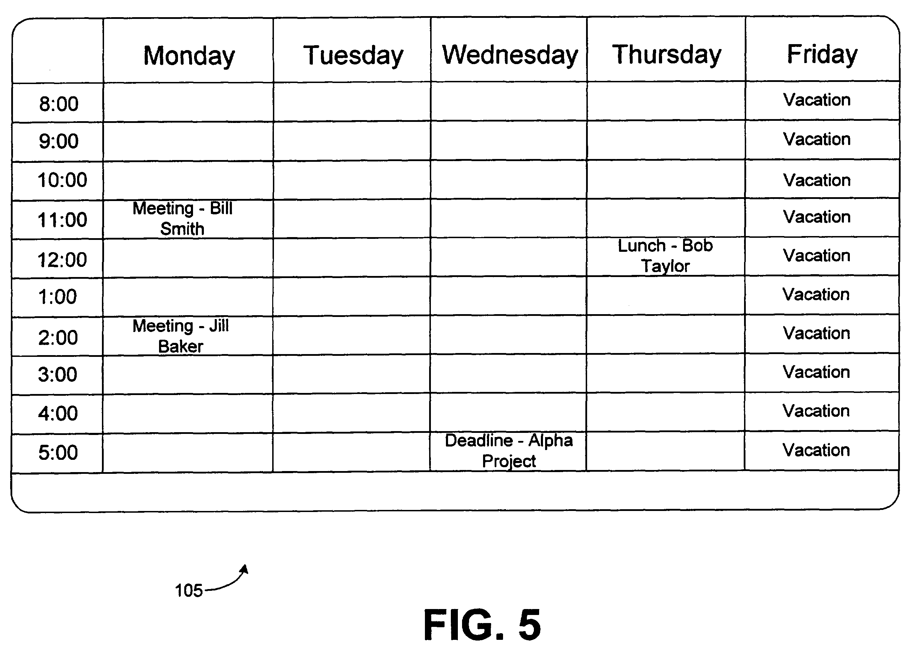

As an example, assume that schedule 105 of FIG. 5 is rendered in response to the user's request. As can be seen by refening to FIG. 5, the schedule 105 (which is defined by a portion of the schedule data 23) includes different time periods and events that may occur during these time periods. For example, schedule 105 relates to a five day week where each day is divided into different hour increments. Each event by its location in the schedule 105 is correlated with a particular time period (*i.e.*, the time period during which the event is scheduled to occur). If desired, the user may select one of the displayed events to obtain more detailed information of the event such as the location of the event, documents needed during the event *etc*.

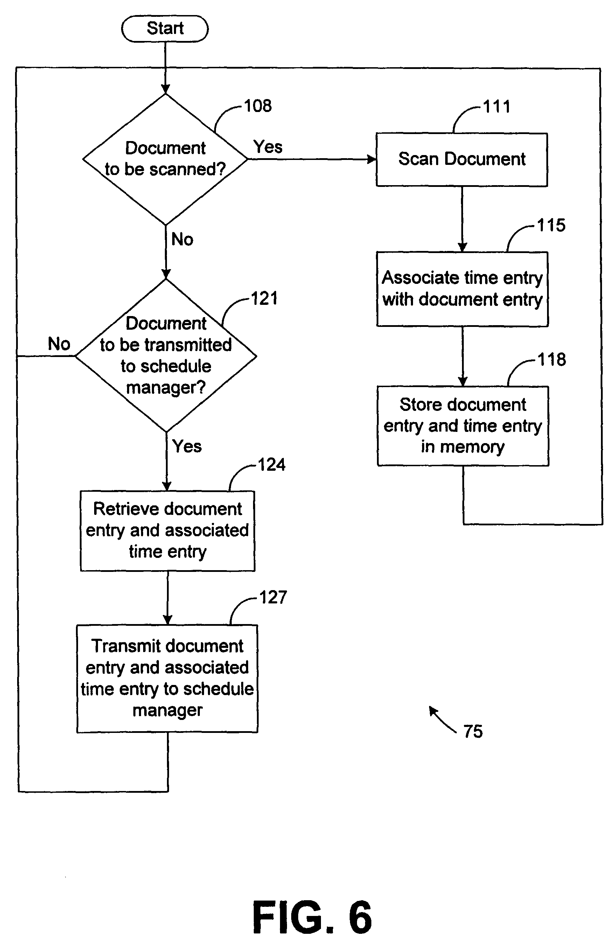

When the user attends one of the events defined by the schedule data 23, the user may receive or review a document during the event. If the user wishes to create a software copy of the document, the user scans the document with the scanning device 52, as depicted by blocks 108 and 111 of FIG. 6. At this point the scanning device 52 may be attached to system 21, as shown by FIG. 1, or the scanning device 52 may be detached from system 21 so that the scanning device 52 may be easily transported to the location of the event. In scanning the document the image acquisition device 63 (FIG. 2) captures an image of the document. Data defining this image is stored in memory 65 as a document entry 58 via techniques known in the art. During the scan, the clock 83 produces a time entry 81 that indicates the time when the time entry 81 was produced. The data manager 75 stores this time entry 81 in memory 65 and correlates the time entry 81 with the document entry 58 that defines the image of the document being scanned, as shown by blocks 115 and 118 of FIG. 6.

After scanning the document, the scanning device 52 is attached to the system 21 (assuming that the scanning device 52 is not already attached to the system 21 during the scanning process). Once the scanning device 52 is attached to the system 21, the data manager 75 transmits the document entry 58 and the correlated time entry 81 to schedule manager 30, as shown by blocks 121, 124, and 127 of FIG. 6.

It should be noted that the document entry 58 and the correlated time entry 81 can be transmitted from the scanning device 52 to the schedule manager 30 via wireless signals. Therefore, it is not necessary for the scanning device 52 to be attached to the system 21, as described hereinabove. Furthermore, the document entry 58 and the correlated time entry 81 may be transmitted to the schedule manager 30 over conventional communication networks, such as the publicly-switched-telephone-network (PSTN), for example.

The schedule manager 30 stores the document entry 58 received from the scanning device 52 into memory 25, as depicted by blocks 131 and 133 of FIG. 4. The schedule manager 30 also searches the schedule data 23 to identify the event that corresponds with the time entry 81 received from the scanning device 52. In this regard, the schedule manager 30 searches for the event in schedule data 23 that is scheduled for a time range that includes or is close to the time indicated by the time entry 81. Once the corresponding event is identified, the schedule manager 30 correlates the identified event with the corresponding document entry 58, as shown by blocks 136 and 138 of FIG. 4.

After the document entry 58 is correlated with the corresponding event, the user may wish to retrieve the document entry 58 defining the document that was scanned during the event. Accordingly, the user inputs information into the system 21 via input device 35 identifying the event. The schedule manager 30 in response analyzes the user's inputs and the schedule data 23 to identify the event, as depicted by blocks 142 and 145 of FIG. 4.

The schedule manager 30 then identifies and retrieves the document entry 58 that is correlated with the event as shown by block 148 of FIG. 4. It is possible for the event to be correlated with more than one document entry 58. In this case, the schedule manager 30 preferably transmits information (such as the filenames of the correlated document entries 58) to the display 38 identifying the correlated document entries 58. This information is displayed to the user via the display device 38, and the user preferably selects one of the document entries 58 for viewing. In response, the schedule manager 30 retrieves the selected document entry 58.

In situations where only one document entry 58 is correlated with the identified event, the schedule manager 30 automatically retrieves the correlated document entry 58. Once the appropriate document entry 58 is retrieved, the schedule manager 30 transmits the retrieved document entry 58 to the display device 38 or printer 41, which displays an image defined by the retrieved document entry 58 through techniques known in the art, as shown by block 152 of FIG. 4.

Therefore, the user is able to view an image of the document scanned into the system 21 during the identified event. The user does not need to provide information identifying the document in the preferred embodiment. Instead, the user may provide information identifying the event (such as the name of the event, the time of the event, the location of the event, the name of persons attending the event, *etc.*), and the system 21 automatically uses this information to locate and retrieve the document or documents correlated with the event.

It should be noted that it may take more than one request for the user to identify the appropriate event. For example, the user may not remember the exact date and time of the event but may remember an approximate date range and other details of the event. In this regard, the user may remember that the desired document was scanned by scanning device 52 during a meeting with a particular person in a particular month. The schedule manager 30 may locate a plurality of events based on this information. The user in another request(s) may then select one of these events. The schedule manager 30 then utilizes this selected event to retrieve a corresponding document entry 58 via the techniques described hereinabove.

Furthermore, it should also be noted that the schedule manager 30 may correlate document entry 58 with a corresponding event without using a time entry 81. For example, after scanning the document via scanning device 52, the user may provide inputs indicating which event corresponds with the document. In response, the document entry 58 defining an image of the document is correlated with the event identified by the user's inputs. Alternatively, a document entry 58 may be correlated with an event through the use of location data instead of time data. Therefore, clock 83 and time entry 81 are not necessary for implementing the present invention.

In addition, in the preferred operation, the schedule manager 30 is able to identify an event that corresponds with a received document entry 58 in block 136. However, if the schedule manager 30 is unable to identify an event corresponding with the document entry 58, then the schedule manager 30 preferably creates an event in schedule data 23 and correlates this event with the document entry 58. For example, the schedule manager 23 could create an event generically entitled "data captured" and correlate this newly created event with the foregoing document entry 58. Therefore, when the schedule data 23 is rendered to the user, the user (through the techniques described hereinabove) can access the document entry 58 via the event created by the schedule manager 30.

It should be emphasized that the above-described embodiments of the present invention, particularly, any "preferred" embodiments, are merely possible examples of implementations, merely set forth for a clear understanding of the principles of the invention. Many variations and modifications may be made to the above-described embodiment(s) of the invention without departing substantially from the spirit and principles of the invention. All such modifications and variations are intended to be included herein within the scope of the present invention.

## Claims

1. A system (21) for storing and retrieving document data, comprising:
a data storage device (25) having schedule data (23) stored therein, said schedule data (23) associated wit a plurality of events;
an input device (35);
a scanning device (52) configured to scan a surface of a document and to produce document data (58) based on an image of said document; and
a schedule manager (30) configured to store said document data (58), to determine a correspondence between said document data (58) and one of said events, to correlate said document data (58) with said schedule data (23) based on said correspondence, and to retrieve said document data (58) in response to a request transmitted from said input device (35), said request identifying said one event.

2. The system (21) of claim 1, wherein said correspondence is based on a determination that said document data (58) is scanned by said scanning device (52) during said one event.

3. The system (21) of claim 1, further comprising:
a clock (83); and
a data manager (75) configured to correlate a time entry (81) with said document data (58), said time entry (81) based on data from said clock (83),
wherein said correspondence is based on said time entry (81).

4. The system (21) of claim 1, further comprising:
a location sensor (88); and
a data manager (75) configured to correlate a location entry (91) with said document data (58), said location entry (91) based on data from said location sensor (88),
wherein said correspondence is based on said location entry (91).

5. A method for storing and retrieving document data, comprising the steps of:
defining schedule data (23) based on a plurality of events;
scanning a document;
producing document data (58) based on said scanning step;
storing said document data (58);
correlating said document data (58) with one of said events;
receiving inputs from a user;
identifying said one event based on said inputs;
determining whether said document data (58) is correlated with said one event in response to said identifying step; and
retrieving said document data (58) in response to a determination in said determining step that said document data (58) is correlated with said one event.

6. The method of claim 5, further comprising the step of determining where said scanning step is performed.

7. The method of claim 5, further comprising the step of determining whether said scanning step occurs during said one event.

8. The method of claim 5, further comprising the step of performing said correlating step based on said inputs.

9. The method of claim 5, further comprising the steps of:
defining a location entry (91);
correlating said location entry (91) wit said document data (58); and
identifying said one event based on said location entry (91).

10. The method of claim 5, further comprising the steps of:
defining a time entry (81);
correlating said time entry (81) with said document data (58); and
identifying said one event based on said time entry (81).
